# EUROPÄISCHE PATENTSCHRIFT

(11) **EP 3 378 117 B1**
(45) Veröffentlichungstag und Bekanntmachung des Hinweises auf die Patenterteilung: **02.01.2019**
(21) Anmeldenummer: 17702862.8
(22) Anmeldetag: 01.02.2017
(51) Int. Cl.: H01M 8/0247, H01M 8/0258, H01M 8/0273, H01M 8/0297

(54) **BIPOLARPLATTE MIT ASYMMETRISCHEN DICHTUNGSABSCHNITTEN, SOWIE BRENNSTOFFZELLENSTAPEL MIT EINER SOLCHEN**
BIPOLAR PLATE HAVING ASYMMETRICAL SEALING SECTIONS, AND FUEL CELL STACK HAVING SUCH A BIPOLAR PLATE
PLAQUE BIPOLAIRE À SECTIONS D'ÉTANCHÉITÉ ASYMÉTRIQUES ET EMPILEMENT DE PILES À COMBUSTIBLE MUNI D'UNE TELLE PLAQUE BIPOLAIRE

(30) Priorität: 10.02.2016 DE 102016202010
(43) Veröffentlichungstag der Anmeldung: 26.09.2018
(73) Patentinhaber: Audi AG, 85049 Ingolstadt (DE); VOLKSWAGEN AKTIENGESELLSCHAFT, 38440 Wolfsburg (DE)
(72) Erfinder: JILANI, Adel, Burnaby, British Columbia V5J 5J8 (CA)
(86) Internationale Anmeldenummer: PCT/EP2017/052181
(87) Internationale Veröffentlichungsnummer: WO 2017/137292

(56) Entgegenhaltungen:
- WO-A1-2010/030654
- DE-A1- 10 028 395
- DE-A1-102007 023 544
- DE-A1-102008 013 038

## Beschreibung

Die Erfindung betrifft eine Bipolarplatte für einen Brennstoffzellenstapel, sowie ein Brennstoffzellenstapel mit einer solchen Bipolarplatte.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die sogenannte Membran-Elektroden-Anordnung (MEA für *membrane electrode assembly*), die ein Gefüge aus einer ionenleitenden (meist protonenleitenden) Membran und jeweils einer beidseitig an der Membran angeordneten katalytischen Elektrode (Anode und Kathode) ist. Letztere umfassen zumeist geträgerte Edelmetalle, insbesondere Platin. Zudem können Gasdiffusionslagen (GDL) beidseitig der Membran-Elektroden-Anordnung an den der Membran abgewandten Seiten der Elektroden angeordnet sein. In der Regel wird die Brennstoffzelle durch eine Vielzahl im Stapel (*stack*) angeordneter MEA gebildet, deren elektrische Leistungen sich addieren. Zwischen den einzelnen Membran-Elektroden-Anordnungen sind in der Regel Bipolarplatten (auch Flussfeld- oder Separatorplatten genannt) angeordnet, welche eine Versorgung der Einzelzellen mit den Betriebsmedien, also den Reaktanten, sicherstellen und üblicherweise auch der Kühlung dienen. Zudem sorgen die Bipolarplatten für einen elektrisch leitfähigen Kontakt zu den Membran-Elektroden-Anordnungen.

Im Betrieb der Brennstoffzelle wird der Brennstoff (Anodenbetriebsmedium), insbesondere Wasserstoff H₂ oder ein wasserstoffhaltiges Gasgemisch, über ein anodenseitiges offenes Flussfeld der Bipolarplatte der Anode zugeführt, wo eine elektrochemische Oxidation von H₂ zu Protonen H⁺ unter Abgabe von Elektronen stattfindet (H₂ → 2 H⁺ + 2 e⁻). Über den Elektrolyten oder die Membran, welche die Reaktionsräume gasdicht voneinander trennt und elektrisch isoliert, erfolgt ein (wassergebundener oder wasserfreier) Transport der Protonen aus dem Anodenraum in den Kathodenraum. Die an der Anode bereitgestellten Elektronen werden über eine elektrische Leitung der Kathode zugeleitet. Der Kathode wird über ein kathodenseitiges offenes Flussfeld der Bipolarplatte Sauerstoff oder ein sauerstoffhaltiges Gasgemisch (zum Beispiel Luft) als Kathodenbetriebsmedium zugeführt, sodass eine Reduktion von O₂ zu O²⁻ unter Aufnahme der Elektronen stattfindet (½ O₂ + 2 e⁻ → O²⁻). Gleichzeitig reagieren im Kathodenraum die Sauerstoffanionen mit den über die Membran transportierten Protonen unter Bildung von Wasser O²⁻ + 2 H⁺ → H₂O).

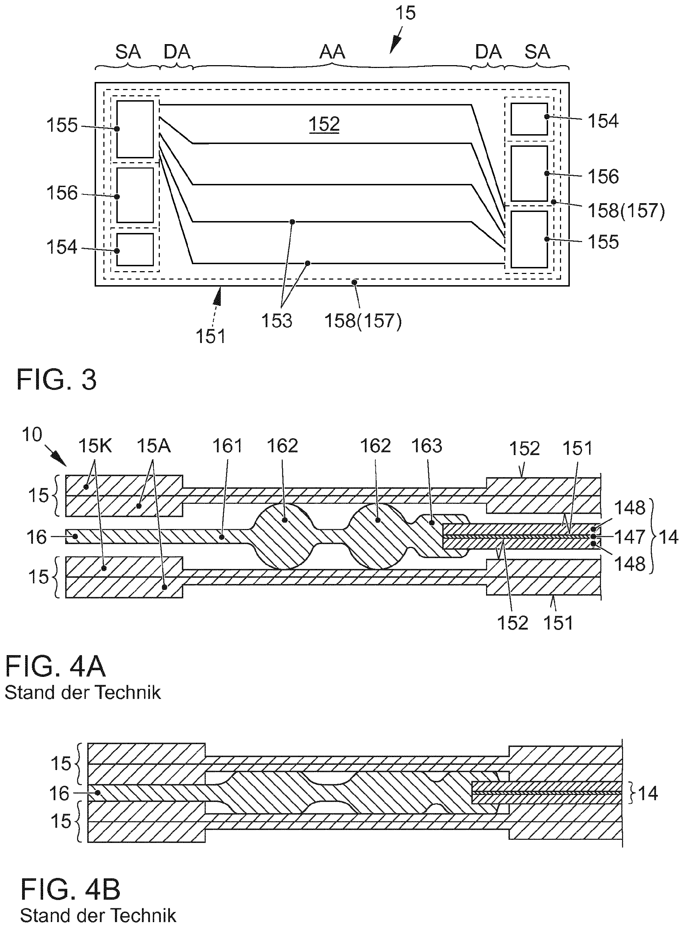

Eine Herausforderung der Brennstoffzellen-Technologie stellt die fluiddichte Abdichtung von Brennstoffzellenstapeln dar. Häufig kommen hier Dichtungselemente zum Einsatz, die abwechselnd mit den Bipolarplatten gestapelt werden und bei einem entsprechenden Anpressen des Stapels elastisch deformiert werden. Die Dichtungselemente können als separate Bauteile verwendet werden oder an die Bipolarplatte oder die Membran-Elektroden-Anordnung angeformt sein. Bekannt ist in diesem Zusammenhang insbesondere, ein solches Dichtungselement rahmenartig umlaufend an die Membran-Elektroden-Anordnung anzuformen. Dabei ist das Dichtungselement üblicherweise mit Dichtungswülsten versehen, die mit entsprechenden Dichtungsabschnitten der Bipolarplatte dichtend zusammenwirken (siehe zum Beispiel Figur 4). Zu diesem Zweck sind die Dichtungsabschnitte der Bipolarplatte mit Vertiefungen ausgebildet, in denen die Dichtungswülste eingreifen. Die für diese Vertiefungen erforderlichen dünnen Wandstärken der Bipolarplatte führen jedoch zu einer Destabilisierung derselben und zu der Gefahr von Brüchen. Dieses ist insbesondere bei Bipolarplatten der Fall, die aus Carbon-Werkstoffen bestehen. Aufgrund der hohen erforderlichen Anpresskräfte bei diesem Design kann es zudem zu einem Verblocken des Dichtelements kommen. Schließlich besteht das Problem von Beeinträchtigungen der Dichtung sowie von starken Materialbeanspruchungen, wenn es bei der Herstellung des Brennstoffzellenstapels zu einem lateralen Versatz zwischen der Bipolarplatte und dem Dichtelement oder zwischen zwei benachbarten Bipolarplatten kommt.

US 2011/0159398 A1 offenbart Bipolarplatten mit Dichtungsvorsprüngen, welche innerhalb einer Brennstoffzelle im Bereich eines Dichtungselements einer Membran-Elektroden-Anordnung angeordnet sind. Die Dichtungsvorsprünge sind beidseitig der Dichtung und versetzt zueinander angeordnet.

JP 2006114227 A offenbart ebenfalls Bipolarplatten mit Dichtungsvorsprüngen, welche im Bereich eines Dichtungselements einer Membran-Elektroden-Anordnung angeordnet sind. Die Dichtungsvorsprünge sind beidseitig einer Dichtung angeordnet und können versetzt oder auch nicht versetzt zueinander angeordnet sein.

Der Erfindung liegt nun die Aufgabe zugrunde, eine Bipolarplatte sowie einen Brennstoffzellenstapel vorzuschlagen, mit denen die geschilderten Probleme des Standes der Technik zumindest teilweise überwunden werden.

Diese Aufgabe wird durch eine Bipolarplatte sowie durch einen Brennstoffzellenstapel mit einer solchen mit den Merkmalen der unabhängigen Ansprüche gelöst.

Die erfindungsgemäße Bipolarplatte für einen Brennstoffzellenstapel umfasst eine erste Seite, auf der ein erstes Flussfeld (zum Transport eines ersten Betriebsmediums der Brennstoffzelle) ausgebildet ist, und eine zweite Seite, auf der ein zweites Flussfeld (zum Transport eines zweiten Betriebsmediums der Brennstoffzelle) ausgebildet ist. Die Bipolarplatte umfasst ferner einen ersten Dichtungsabschnitt, der das erste Flussfeld umgibt und einen zweiten Dichtungsabschnitt, der das zweite Flussfeld umgibt. Dabei sind die Dichtungsabschnitte ausgebildet, in einem Brennstoffzellenstapel mit einem Dichtungselement dichtend zusammen zu wirken. Erfindungsgemäß ist in dem ersten Dichtungsabschnitt der Bipolarplatte mindestens ein Dichtungsvorsprung ausgebildet. Ferner ist der zweite Dichtungsabschnitt ohne einen solchen Dichtungsvorsprung und/oder im Wesentlichen eben ausgebildet.

Während im Stand der Technik beide auf beiden Seiten der Bipolarplatte angeordnete Dichtungsabschnitte einander gegenüberliegende oder zueinander versetzte Dichtungsvorsprünge aufweisen, ist erfindungsgemäß nur einer der beiden Dichtungsabschnitte mit mindestens einem Dichtungsvorsprung ausgebildet, während der zweite Dichtungsabschnitt im Wesentlichen eben ausgebildet ist. Hierdurch werden mehrere Vorteile erreicht. Zum einen ermöglicht dieses Design der Bipolarplatte die Verwendung ebener Dichtungselemente, die ohne Dichtungswülste ausgebildet sind. Zudem entfällt das Erfordernis von Dichtungsvertiefungen herkömmlicher Bipolarplatten, in welche die Dichtungswülste des elastischen Dichtungselements einliegen. Hierdurch wird die Plattenstabilität deutlich erhöht. Auch ist eine solche Anordnung unempfindlich gegen einen herstellungsbedingten lateralen Versatz der Bipolarplatten und des Dichtungselements. Die Erfinder haben zudem ermittelt, dass geringere Anpresskräfte erforderlich sind, um eine hohe Dichtwirkung zu erzielen.

Die vorgenannten Vorteile kommen besonders gut zum Tragen, wenn gemäß einer bevorzugten Ausgestaltung der Erfindung der zweite Dichtungsabschnitt über seine gesamte, insbesondere sich bis zu einem Rand der Bipolarplatte erstreckende, Breite ohne Dichtungsvorsprung und/oder im Wesentlichen eben ausgebildet ist.

Als ein Dichtungsvorsprung wird im Rahmen der vorliegenden Erfindung jegliches über ein Basisplattenniveau herausragendes Dichtungselement verstanden, das geeignet ist, in einem Brennstoffzellenstapel mit einem elastischen Dichtungselement unter lokaler Druckeinwirkung auf dasselbe zusammenzuwirken, um das Dichtungselement an den Kontaktbereichen zwischen Dichtungsvorsprung und Dichtungselement punktuell und/oder lokal elastisch zu komprimieren. Demgegenüber bedeutet die Ausbildung ohne Dichtungsvorsprung, wie sie erfindungsgemäß der zweite Dichtungsabschnitt aufweist, dass keine solche lokal und/oder punktuell auf das Dichtungselement einwirkende Erhebung vorhanden ist. Mit der Bezeichnung "im Wesentlichen eben ausgebildet" wird darüber hinaus verstanden, dass der Dichtungsabschnitt auch keine Vertiefungen aufweist, die von ihren Dimensionen geeignet sein könnten, dass das elastisch deformierte Dichtungselement hierin eindringen könnte.

In einer vorteilhaften Ausgestaltung der Erfindung ist der zweite Dichtungsabschnitt durch mindestens eine Nut segmentiert, wobei die Nut bezüglich dem mindestens einen Dichtungsvorsprung der gegenüberliegenden Seite der Bipolarplatte versetzt angeordnet ist. Dabei kann die Nut eine Dimension aufweisen, insbesondere eine Nutbreite, die im Wesentlichen kein Eindringen des unter Ausübung eines Anpressdrucks deformierten Dichtelements erlaubt. Durch die beschriebene Segmentierung durch Nuten, die insbesondere parallel zu den gegenüber liegenden Dichtungsvorsprüngen der ersten Dichtungsabschnitte verlaufen, kann die Kontaktfläche zwischen dem Dichtungselement und den Dichtungsabschnitten der Bipolarplatte gesteuert und kontrolliert werden. In Modellierungsversuchen wurde nämlich gefunden, dass mit schmaleren Dichtungsflächen des zweiten Dichtungsabschnitts eine höhere Dichtkraft mit geringerer angewendeter Dichtkraft oder eine höhere Dichtkraft mit gleicher angewendeter Dichtkraft erzielt wird.

Die auf beiden Hauptseiten der Bipolarplatte ausgebildeten Dichtungsabschnitte der Bipolarplatte haben insbesondere einen Verlauf parallel zu und nahe den Seitenkanten der Bipolarplatte. Somit umgeben sie im Wesentlichen die gesamten Flächen der Bipolarplatte umlaufend und in geschlossener Form. Darüber hinaus können auch Dichtungsabschnitte, die die Hauptversorgungsöffnungen der Bipolarplatte umgeben, in der erfindungsgemäßen Form ausgebildet sein, insbesondere indem auf dem ersten Dichtungsabschnitt entsprechende Dichtungsvorsprünge ausgebildet sind und der gegenüberliegende zweite Dichtungsabschnitt ohne solche Dichtungsvorsprünge und/oder im Wesentlichen eben ausgebildet ist.

Der mindestens eine Dichtungsvorsprung kann bezüglich seines Querschnitts eine beliebige Form aufweisen, die geeignet ist, auf ein elastisches Dichtungselement unter dessen lokaler Kompression einzuwirken, sodass eine Dichtung erzielt wird. Insbesondere kommen hier spitz zulaufende Konturen, rechteckartige Konturen, Mehreckkonturen in Frage, wobei jedoch eine abgerundete, beispielsweise halbkreisförmige Kontur oder eine abgerundete Kontur mit flacher Stirnseite bevorzugt ist, da eine solche eine vergleichsweise große Kontaktfläche zwischen Dichtungsvorsprung und Dichtungselement mit gleichmäßigen Dichtspannungen und sanften Übergängen verursacht. Es versteht sich, dass der Dichtungsvorsprung sich wulstförmig über die Länge des ersten Dichtungsabschnitts insbesondere in geschlossener und ununterbrochener Form erstreckt. Auch die Höhe des mindestens einen Dichtungsvorsprungs, mit der dieser gegenüber einem allgemeinen Niveau der Bipolarplatte herausragt, kann weitgehend beliebig gewählt werden, um im Sinne einer optimierten Dichtung gewählt zu werden.

In bevorzugter Ausführung der Erfindung weist der erste Dichtungsabschnitt zwei oder mehr Dichtungsvorsprünge auf, die vorzugsweise parallel zueinander verlaufen, beispielsweise im Sinne eines Doppelwulstes. Durch die Ausstattung mit mehreren Dichtungsvorsprüngen wird die Kontaktfläche zwischen Bipolarplatte und elastischem Dichtungselement weiter erhöht und zusätzlich im Falle einer Leckage an einem Dichtungsvorsprung durch die Dichtungswirkung des anderen Dichtungsvorsprungs aufrechterhalten.

In einer weiteren Ausführung der Erfindung weist der erste Dichtungsabschnitt einen einzigen Dichtungsvorsprung auf und der zweite Dichtungsabschnitt ist durch mindestens eine Nut segmentiert, wobei hier die mindestens eine Nut in dem Dichtungsvorsprung gegenüberliegt. In diese Ausgestaltung ist ein Dichtungsvorsprung mit abgerundeter Kontur mit flacher Stirnseite bevorzugt. Ferner ist in dieser Ausgestaltung die Nut, insbesondere eine Nutbreite, so dimensioniert, dass sie ein gewisses Eindringen des unter Ausübung eines Anpressdrucks deformierten Dichtelements erlaubt.

In einer Ausgestaltung der Erfindung ist die Bipolarplatte aus einer ersten und einer zweiten Platte ausgebildet, die miteinander zusammengesetzt sind. Dabei bildet die erste Platte die erste äußere Seite mit dem ersten Flussfeld und dem ersten Dichtungsabschnitt aus und die zweite Platte die zweite äußere Seite mit dem zweiten Flussfeld und dem zweiten Dichtungsabschnitt. Die Platten können stoffschlüssig miteinander verfügt sein, beispielsweise durch Klebungen oder Schweißnähte, oder lösbar über weitere Dichtelemente miteinander verpresst sein. Vorzugsweise ist zwischen den beiden Platten ein drittes Flussfeld ausgebildet, welches der Durchführung eines Kühlmittels dient.

Im Falle der Ausbildung der Bipolarplatte aus der ersten und der zweiten Platte, ist die zweite Platte im Bereich des zweiten Dichtungsabschnitts mit einer größeren Plattenstärke ausgebildet als außerhalb des zweiten Dichtungsabschnitts. Hierdurch wird die Stabilität der Platte gegenüber der durch die Dichtungsvorsprünge einer benachbarten Bipolarplatte ausgeübten Druckkraft erhöht.

In einer Ausgestaltung der Erfindung ist die Bipolarplatte aus einem elektrisch leitfähigen Kohlenstoff-basiertem Werkstoff hergestellt. Hierbei kann es sich insbesondere um Graphit handeln oder um ein Kompositmaterial aus Graphit und einem Polymer, beispielsweise einem Epoxidharz. Die Kohlenstoff-basierten Werkstoffe werden im Folgenden auch als Carbon-Werkstoffe bezeichnet. Carbon-Bipolarplatten weisen ein geringes spezifisches Gewicht auf und haben ferner den Vorteil, durch übliche Formgebungsverfahren (zum Beispiel Spritzgießen) hergestellt werden zu können und eine hohe Gestaltungsfreiheit aufzuweisen. Beispielsweise können ihre Oberflächenprofile auf beiden Seiten unabhängig voneinander gewählt werden. Demgegenüber werden metallische Bipolarplatten zumeist aus Blechen hergestellt, die durch Pressen profiliert werden. Hierdurch bestimmt ein gewünschtes Profil einer Seite der Bipolarplatte zwangsläufig das Profil auf ihrer anderen Seite. Da Carbon-Bipolarplatten jedoch eine geringere Bruchfestigkeit aufweisen und somit in der Regel eine höhere Wandstärke als Metall-Bipolarplatten benötigen, kommen die Vorteile der erfindungsgemäßen Bipolarplatte insbesondere bei Carbon-Bipolarplatten besonders zum Ausdruck, da die Notwendigkeit einer Vertiefung für das Eingreifen der Dichtungswülste des Dichtungselements wegfällt.

Ein weiterer Aspekt der vorliegenden Erfindung betrifft einen Brennstoffzellenstapel, der eine Mehrzahl abwechselnd aufeinander angeordneter Bipolarplatten gemäß der vorliegenden Erfindung sowie elastische Dichtungselemente aufweist. Der Brennstoffzellenstapel zeichnet sich dadurch aus, dass die Dichtungselemente zumindest im Bereich der Dichtungsabschnitte der Bipolarplatten flach ausgebildet sind. Mit anderen Worten weisen die Dichtungselemente im Bereich der Dichtungsabschnitte der Bipolarplatten keine Dichtungswülste auf. Diese Ausgestaltung ermöglicht eine besonders gute dichtende Wechselwirkung mit den erfindungsgemäß gestalteten Bipolarplatten bei geringen Materialbeanspruchungen. Insbesondere wird die Dichtung dadurch erzielt, dass der mindestens eine Dichtungsvorsprung der Bipolarplatte gegen das flache elastische Dichtungselement einwirkt, dieses gegen die im Wesentlichen ebene Anlagefläche des zweiten Dichtungsbereichs einer benachbarten Bipolarplatte andrückt und komprimiert.

Beispielweise weist das elastische Dichtungselement zumindest im Bereich der Dichtungsabschnitte eine gleichmäßige Stärke im Bereich von 100 bis 500 µm auf, insbesondere im Bereich von 150 bis 400 µm und bevorzugt im Bereich von 200 bis 300 µm. Im Einzelfall wird die Stärke des Dichtungselements in Abhängigkeit von den Dichtungserfordernissen gewählt.

Es versteht sich, dass der Brennstoffzellenstapel außer den Bipolarplatten und den Dichtungselementen auch Membran-Elektroden-Anordnungen umfasst, die abwechselnd mit den Bipolarplatten gestapelt sind. In einer bevorzugten Ausführung der Erfindung ist das elastische Dichtungselement als Teil der Membran-Elektroden-Anordnung ausgebildet, wobei es besonders bevorzugt einen die Membran-Elektroden-Anordnung umlaufenden Randbereich derselben ausbildet. Auf diese Weise lassen sich die miteinander zu stapelnden Komponenten verringern und gleichzeitig die Membran-Elektroden-Anordnung stabilisieren.

Ein weiterer Aspekt der Erfindung betrifft ein Brennstoffzellensystem, das einen Brennstoffzellenstapel gemäß der Erfindung aufweist. Insbesondere weist das Brennstoffzellensystem neben dem Brennstoffzellenstapel eine Anodenversorgung und eine Kathodenversorgung mit den entsprechenden Peripheriekomponenten auf.

Ein weiterer Aspekt der Erfindung betrifft ein Fahrzeug, das ein Brennstoffzellensystem mit einem erfindungsgemäßen Brennstoffzellenstapel aufweist. Bei dem Fahrzeug handelt es sich vorzugsweise um ein Elektrofahrzeug, bei dem eine von dem Brennstoffzellensystem erzeugte elektrische Energie der Versorgung eines Elektrotraktionsmotors und/oder einer Traktionsbatterie dient.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Blockschaltbild eines Brennstoffzellensystems;
- Figur 2: eine Draufsicht auf eine Membran-Elektroden-Anordnung eines Brennstoffzellenstapels;
- Figur 3: eine Draufsicht auf eine Bipolarplatte eines Brennstoffzellenstapels;
- Figur 4: eine Schnittansicht einer Brennstoffzelle gemäß Stand der Technik im Bereich ihres Randabschnitts, umfassend zwei Bipolarplatten und ein dazwischen angeordnetes Dichtungselement, (A): ohne Kompression, (B): mit um 41% komprimiertem Dichtungselement;
- Figur 5: eine Schnittansicht einer Brennstoffzelle gemäß einer ersten Ausgestaltung der Erfindung im Bereich ihres Randabschnitts, umfassend zwei Bipolarplatten und ein dazwischen angeordnetes Dichtungselement, (A): ohne Kompression, (B): mit um 42% komprimiertem Dichtungselement, (C) mit um 50% komprimiertem Dichtungselement;
- Figur 6: Verläufe verschiedener Parameter in Abhängigkeit von der Kompression des Dichtelements der Brennstoffzellen nach Figur 4 und 5, (A): Dichtkraft, (B): Dichtungsspannung, (C) maximale Zugspannung;
- Figur 7: eine Schnittansicht einer Brennstoffzelle gemäß einer zweiten Ausgestaltung der Erfindung im Bereich ihres Randabschnitts, umfassend zwei Bipolarplatten und ein dazwischen angeordnetes Dichtungselement, (A): ohne Kompression, (B): mit um 42% komprimierter Dichtung, (C) mit um 50% komprimierter Dichtung, und
- Figur 8: eine Schnittansicht einer Brennstoffzelle gemäß einer dritten Ausgestaltung der Erfindung im Bereich ihres Randabschnitts, umfassend zwei Bipolarplatten und ein dazwischen angeordnetes Dichtungselement, (A): ohne Kompression, (B): mit um 50% komprimierter Dichtung.

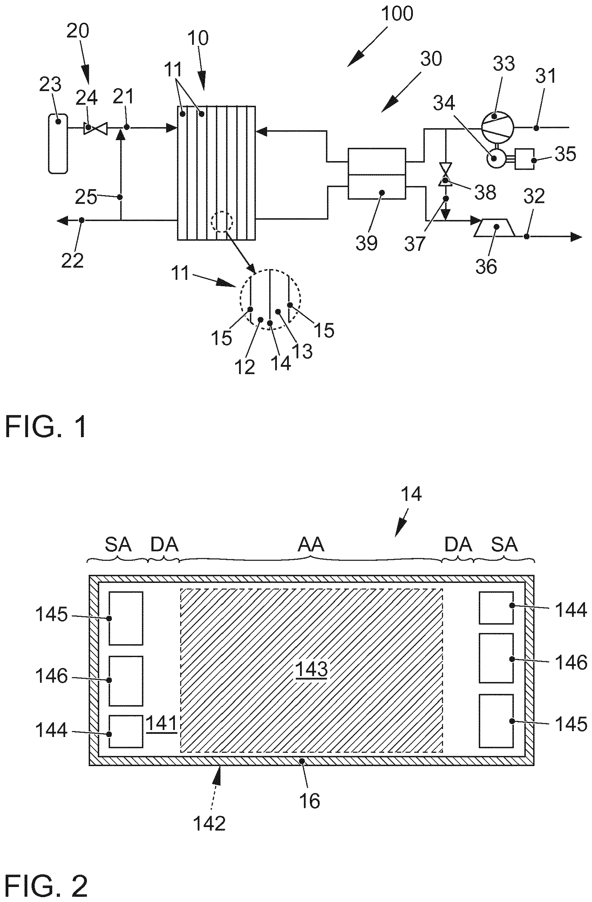

Figur 1 zeigt ein insgesamt mit 100 bezeichnetes Brennstoffzellensystem gemäß einer bevorzugten Ausgestaltung der vorliegenden Erfindung. Das Brennstoffzellensystem 100 ist Teil eines nicht weiter dargestellten Fahrzeugs, insbesondere eines Elektrofahrzeugs, das einen Elektrotraktionsmotor aufweist, der durch das Brennstoffzellensystem 100 mit elektrischer Energie versorgt wird.

Das Brennstoffzellensystem 100 umfasst als Kernkomponente einen Brennstoffzellenstapel 10, der eine Vielzahl von in Stapelform angeordneten Einzelzellen 11 aufweist, die durch abwechselnd gestapelte Membran-Elektroden-Anordnungen (MEA) 14 und Bipolarplatten 15 ausgebildet werden (siehe Detailausschnitt). Jede Einzelzelle 11 umfasst somit jeweils eine MEA 14, die eine hier nicht näher dargestellte ionenleitfähige Polymerelektrolytmembran aufweist sowie beidseits daran angeordnete katalytische Elektroden, nämlich eine Anode und eine Kathode, welche die jeweilige Teilreaktion der Brennstoffzellenumsetzung katalysieren und insbesondere als Beschichtungen auf der Membran ausgebildet sein können. Die Anoden- und Kathodenelektrode weisen ein katalytisches Material auf, beispielsweise Platin, das auf einem elektrisch leitfähigen Trägermaterial großer spezifischer Oberfläche, beispielsweise einem kohlenstoffbasierten Material, geträgert vorliegt. Zwischen einer Bipolarplatte 15 und der Anode wird somit ein Anodenraum 12 ausgebildet und zwischen der Kathode und der nächsten Bipolarplatte 15 der Kathodenraum 13. Die Bipolarplatten 15 dienen der Zuführung der Betriebsmedien in die Anoden- und Kathodenräume 12, 13 und stellen ferner die elektrische Verbindung zwischen den einzelnen Brennstoffzellen 11 her. Optional können Gasdiffusionslagen zwischen den Membran-Elektroden-Anordnungen 14 und den Bipolarplatten 15 angeordnet sein.

Um den Brennstoffzellenstapel 10 mit den Betriebsmedien zu versorgen, weist das Brennstoffzellensystem 100 einerseits eine Anodenversorgung 20 und andererseits eine Kathodenversorgung 30 auf.

Die Anodenversorgung 20 umfasst einen Anodenversorgungspfad 21, welcher der Zuführung eines Anodenbetriebsmediums (dem Brennstoff), beispielsweise Wasserstoff, in die Anodenräume 12 des Brennstoffzellenstapels 10 dient. Zu diesem Zweck verbindet der Anodenversorgungspfad 21 einen Brennstoffspeicher 23 mit einem Anodeneinlass des Brennstoffzellenstapels 10. Die Anodenversorgung 20 umfasst ferner einen Anodenabgaspfad 22, der das Anodenabgas aus den Anodenräumen 12 über einen Anodenauslass des Brennstoffzellenstapels 10 abführt. Der Anodenbetriebsdruck auf den Anodenseiten 12 des Brennstoffzellenstapels 10 ist über ein Stellmittel 24 in dem Anodenversorgungspfad 21 einstellbar. Darüber hinaus kann die Anodenversorgung 20 wie dargestellt eine BrennstoffRezirkulationsleitung 25 aufweisen, welche den Anodenabgaspfad 22 mit dem Anodenversorgungspfad 21 verbindet. Die Rezirkulation von Brennstoff ist üblich, um den zumeist überstöchiometrisch eingesetzten Brennstoff dem Stapel zurückzuführen und zu nutzen.

Die Kathodenversorgung 30 umfasst einen Kathodenversorgungspfad 31, welcher den Kathodenräumen 13 des Brennstoffzellenstapels 10 ein sauerstoffhaltiges Kathodenbetriebsmedium zuführt, insbesondere Luft, die aus der Umgebung angesaugt wird. Die Kathodenversorgung 30 umfasst ferner einen Kathodenabgaspfad 32, welcher das Kathodenabgas (insbesondere die Abluft) aus den Kathodenräumen 13 des Brennstoffzellenstapels 10 abführt und dieses gegebenenfalls einer nicht dargestellten Abgasanlage zuführt. Zur Förderung und Verdichtung des Kathodenbetriebsmediums ist in dem Kathodenversorgungspfad 31 ein Verdichter 33 angeordnet. In dem dargestellten Ausführungsbeispiel ist der Verdichter 33 als ein hauptsächlich elektromotorisch angetriebener Verdichter ausgestaltet, dessen Antrieb über einen mit einer entsprechenden Leistungselektronik 35 ausgestatteten Elektromotor 34 erfolgt. Der Verdichter 33 kann ferner durch eine im Kathodenabgaspfad 32 angeordnete Turbine 36 (gegebenenfalls mit variabler Turbinengeometrie) unterstützend über eine gemeinsame Welle (nicht dargestellt) angetrieben werden.

Die Kathodenversorgung 30 kann gemäß dem dargestellten Ausführungsbeispiel ferner eine Wastegate-Leitung 37 aufweisen, welche die Kathodenversorgungsleitung 31 mit der Kathodenabgasleitung 32 verbindet, also einen Bypass des Brennstoffzellenstapels 10 darstellt. Die Wastegate-Leitung 37 erlaubt, überschüssigen Luftmassenstrom an dem Brennstoffzellenstapel 10 vorbeizuführen, ohne den Verdichter 33 herunterzufahren. Ein in der Wastegate-Leitung 37 angeordnetes Stellmittel 38 dient der Steuerung der Menge des den Brennstoffzellenstapel 10 umgehenden Kathodenbetriebsmediums. Sämtliche Stellmittel 24, 26, 38 des Brennstoffzellensystems 100 können als regelbare oder nicht regelbare Ventile oder Klappen ausgebildet sein. Entsprechende weitere Stellmittel können in den Leitungen 21, 22, 31 und 32 angeordnet sein, um den Brennstoffzellenstapel 10 von der Umgebung isolieren zu können.

Das Brennstoffzellensystem 100 kann ferner ein Befeuchtermodul 39 aufweisen. Das Befeuchtermodul 39 ist einerseits so in dem Kathodenversorgungspfad 31 angeordnet, dass es von dem Kathodenbetriebsgas durchströmbar ist. Andererseits ist es so in dem Kathodenabgaspfad 32 angeordnet, dass es von dem Kathodenabgas durchströmbar ist. Der Befeuchter 39 weist typischerweise eine Mehrzahl von wasserdampfpermeablen Membranen auf, die entweder flächig oder in Form von Hohlfasern ausgebildet sind. Dabei wird eine Seite der Membranen von dem vergleichsweise trockenen Kathodenbetriebsgas (Luft) überströmt und die andere Seite von dem vergleichsweise feuchten Kathodenabgas (Abgas). Getrieben durch den höheren Partialdruck an Wasserdampf in dem Kathodenabgas kommt es zu einem Übertritt von Wasserdampf über die Membran in das Kathodenbetriebsgas, das auf diese Weise befeuchtet wird.

Verschiedene weitere Einzelheiten der Anoden- und Kathodenversorgung 20, 30 sind in der vereinfachten Figur 1 aus Gründen der Übersichtlichkeit nicht gezeigt. So kann in dem Anoden- und/oder Kathodenabgaspfad 22, 32 ein Wasserabscheider verbaut sein, um das aus der Brennstoffzellenreaktion entstehende Produktwasser zu kondensieren und abzuleiten. Schließlich kann die Anodenabgasleitung 22 in die Kathodenabgasleitung 32 münden, sodass das Anodenabgas und das Kathodenabgas über eine gemeinsame Abgasanlage abgeführt werden.

Die Figuren 2 und 3 zeigen jeweils eine beispielhafte Membran-Elektroden-Anordnung 14 und Bipolarplatte 15 gemäß der Erfindung in einer Draufsicht.

Beide Bauteile unterteilen sich in einen aktiven Bereich AA, Versorgungsbereiche SA und Verteilerbereiche DA. Der aktive Bereich AA zeichnet sich dadurch aus, dass in diesem Bereich die Brennstoffzellreaktionen stattfinden. Zu diesem Zweck weist die Membran-Elektroden-Anordnung 14 im aktiven Bereich AA beidseits der Polymerelektrolytmembran eine katalytische Elektrode 143 auf. Innerhalb der Versorgungsbereiche SA sind Versorgungsöffnungen 144, 145, 146 seitens der Membran-Elektroden-Anordnung 14 beziehungsweise 154, 155, 156 seitens der Bipolarplatte 15 angeordnet, die im gestapelten Zustand im Wesentlichen miteinander fluchten und Hauptversorgungskanäle ausbilden, welche den Brennstoffzellenstapel 10 über seine gesamte Stapelhöhe durchsetzen. Die Anodenein- und - auslassöffnungen 144 beziehungsweise 154 dienen der Zuführung des Anodenbetriebsgases, also des Brennstoffs, beispielsweise Wasserstoff, sowie der Abführung des Anodenabgases nach Überströmen des aktiven Bereichs AA. Die Kathodenein- und -auslassöffnungen 145 beziehungsweise 155 dienen der Zuführung des Kathodenbetriebsgases, das insbesondere Sauerstoff oder ein sauerstoffhaltiges Gemisch, vorzugsweise Luft, ist, sowie der Abführung des Kathodenabgases nach Überströmen des aktiven Bereichs AA. Die Kühlmittelein- und - auslassöffnungen 146 beziehungsweise 156 dienen der Zuführung und der Ableitung des Kühlmittels.

Die MEA 14 weist eine Anodenseite 141 auf, die in Figur 2 sichtbar ist. Somit ist die dargestellte katalytische Elektrode 143 als Anode ausgebildet, beispielsweise als Beschichtung auf der Polymerelektrolytmembran. Die in Figur 2 nicht sichtbare Kathodenseite 142 weist eine entsprechende katalytische Elektrode auf, hier die Kathode. Die Polymerelektrolytmembran kann sich über die gesamte Ausbreitung der Membran-Elektroden-Anordnung 14 erstrecken, mindestens aber über den zentralen aktiven Bereich AA. In den übrigen Bereichen SA und DA kann eine verstärkende Trägerfolie angeordnet sein, welche die Membran und den aktiven Bereich AA beidseits umschließt und rahmenartig einfasst. Zumindest im äußeren Randbereich (schraffierte Fläche) ist die Membran-Elektroden-Anordnung 14 ferner von einem elastischen Dichtungselement 16 rahmenartig umgeben, das aus einem elastischen Polymermaterial, beispielsweise Silikon oder dergleichen gebildet ist. Das elastische Dichtungselement 16 kann stoffschlüssig mit der Membran-Elektroden-Anordnung 14 verbunden sein, sodass es ein Bestandteil derselben ist.

Die in Figur 3 dargestellte Bipolarplatte 15 weist eine in der Darstellung sichtbare zweite Seite, hier die Kathodenseite 152, auf sowie eine verdeckte erste Seite, hier die Anodenseite 151. In typischen Ausführungen ist die Bipolarplatte 15 aus zwei zusammengefügten Plattenhälften, der Anodenplatte und der Kathodenplatte, aufgebaut. Auf der dargestellten Kathodenseite 152 sind Betriebsmittelkanäle 153 als offene rinnenartige Kanalstrukturen ausgebildet, welche die Kathodeneinlassöffnung 155 mit der Kathodenauslassöffnung 155 verbinden und die ein zweites Flussfeld, hier das Kathodenflussfeld zur Leitung des Kathodenbetriebsmediums ausbilden. Dargestellt sind lediglich fünf exemplarische Betriebsmittelkanäle 153, wobei üblicherweise eine wesentlich größere Anzahl vorhanden ist. Desgleichen weist die hier nicht sichtbare Anodenseite 151 entsprechende Betriebsmittelkanäle auf, welche die Anodeneinlassöffnung 154 mit der Anodenauslassöffnung 154 verbinden und die ein erstes Flussfeld, hier das Anodenflussfeld zur Leitung des Anodenbetriebsmediums ausbilden. Auch diese Betriebsmittelkanäle für das Anodenbetriebsmedium sind typischerweise als offene, rinnenartige Kanalstrukturen ausgebildet. Im Inneren der Bipolarplatte 15, insbesondere zwischen den beiden Plattenhälften, verlaufen eingeschlossene Kühlmittelkanäle, welche die Kühlmitteleinlassöffnung 156 mit der Kühlmittelauslassöffnung 156 verbinden.

Im umlaufenden Randbereich der sichtbaren zweiten Kathodenseite 152 der Bipolarplatte 15 ist ein zweiter Dichtungsabschnitt 158 ausgebildet, der im zusammengesetzten Brennstoffzellenstapel 10 mit dem Dichtungselement 16 der Kathodenseite 142 der Membran-Elektroden-Anordnung 14 dichtend zusammenwirkt. Gleichermaßen ist im umlaufenden Randbereich der Bipolarplatte 15 der verdeckten ersten Anodenseite 151 ein erster Dichtungsabschnitt 157 ausgebildet, der im Brennstoffzellenstapel mit dem Dichtungselement 16 der Anodenseite 141 der Membran-Elektroden-Anordnung 14 dichtend zusammenwirkt. Die Begrenzung der Dichtungsabschnitte 158, 157 ist in Figur 3 durch die unterbrochenen Linien dargestellt. Wie dargestellt, können auch die Versorgungsöffnungen 154, 156, 156 auf beiden Seiten der Bipolarplatte 15 jeweils von entsprechenden ersten und zweiten Dichtungsabschnitten 157, 158 umlaufend umgeben sein.

Die Ausbildung der Dichtungsabschnitte gemäß Stand der Technik sowie gemäß Ausgestaltungen der Erfindung ist in den nachfolgenden Figuren anhand von Schnitten im Randbereich einer Brennstoffzelle dargestellt.

Figur 4 zeigt eine Einzelzelle eines Brennstoffzellenstapels 10 gemäß Stand der Technik in einer Schnittdarstellung im Randbereich der Zelle, das heißt im Randbereich der Bipolarplatten 15. Dargestellt ist eine Membran-Elektroden-Anordnung 14, an die ein Dichtungselement 16 randständig angeformt ist. Die Membran-Elektroden-Anordnung 14 mit dem Dichtungselement 16 ist zwischen zwei Bipolarplatten 15 angeordnet. Die Membran-Elektroden-Anordnung 14 umfasst ein Laminat 147, bestehend aus einer Polymerelektrolytmembran sowie zwei beidseitig darauf beschichteten katalytischen Elektroden (nicht im Einzelnen dargestellt), nämlich einer Anode und einer Kathode. Beidseitig des Laminats 147 ist jeweils eine Gasdiffusionsschicht 148 angeordnet.

Das elastische Dichtungselement 16 weist einen ebenen flächigen Grundkörper 161 auf, sowie zwei Dichtungswülste 162. Die Verbindung zu der Membran-Elektroden-Anordnung 14 wird über einen flanschartig ausgebildeten Verbindungsabschnitt 163 ausgebildet, der den Randbereich der MEA 14 beidseitig umschließt.

Die Bipolarplatten 15 sind jeweils aus zwei Halbplatten zusammengesetzt, nämlich einer ersten Halbplatte 15A (Anodenplatte) sowie der zweiten Halbplatte 15K (Kathodenplatte). In dem in Figur 4 dargestellten Dichtungsabschnitt der Bipolarplatten 15 weisen diese sowohl auf ihrer Anodenseite 151 als auch auf ihrer Kathodenseite 152 jeweils eine Vertiefung auf, in welchen die Dichtungswülste 162 des Dichtungselements 16 anliegen. Ein typischer Durchmesser eines Dichtungswulstes 162, gemessen von seinem niedrigsten bis zu seinem höchsten Punkt, liegt in der Größenordnung von 1 bis 3 mm, im gezeigten Beispiel bei 1,1 mm, während eine typische Breite der Vertiefungen der Bipolarplatten 15 im Bereich von 3-10 mm liegt, hier bei 5,2 mm.

Nach Aufbringen einer Kompressionskraft kommt es zu einer elastischen Kompression der Dichtungswülste 162, wie es in Figur 4B gezeigt ist, sodass die Anlegeflächen der Bipolarplatten in Berührung mit dem Grundkörper 161 des Dichtungselements 16 beziehungsweise mit der Membran-Elektroden-Anordnung 114 kommen. Dies ist im dargestellten Beispiel bei einem Kompressionsgrad der Dichtungswülste 162 um 41 % der Fall. Hierfür sind vergleichsweise hohe Anpresskräfte erforderlich. Ferner ist an dem in Figur 4 gezeigten Design nachteilig, dass im Bereich der Vertiefungen der gezeigten Dichtungsabschnitte dünne Wandstärken der Bipolarplatte 15 beziehungsweise ihrer Halbplatten 15A, 15K vorliegen, sodass es in diesem Bereich zu Instabilitäten und Brüchen kommen kann. Problematisch ist ferner, dass es bei fertigungsbedingten lateralen Verschiebungen der Bipolarplatten 15 gegenüber dem Dichtungselement 16 zu Beeinträchtigungen der Dichtwirkung kommen kann, nämlich wenn die Dichtungswülste 162 mit den Kanten der Vertiefungen in Kontakt kommen. Zudem führt diese Situation zu Spannungen in dem Dichtungselement 16 und reduziert dessen Lebensdauer. Im Falle einer häufig auftretenden Überkompression besteht ferner die Gefahr des Verblockens der Dichtung. Schließlich erfordert die dargestellte Gestaltung den Verbindungsabschnitt 163, um die Verbindung mit der MEA 14 herzustellen.

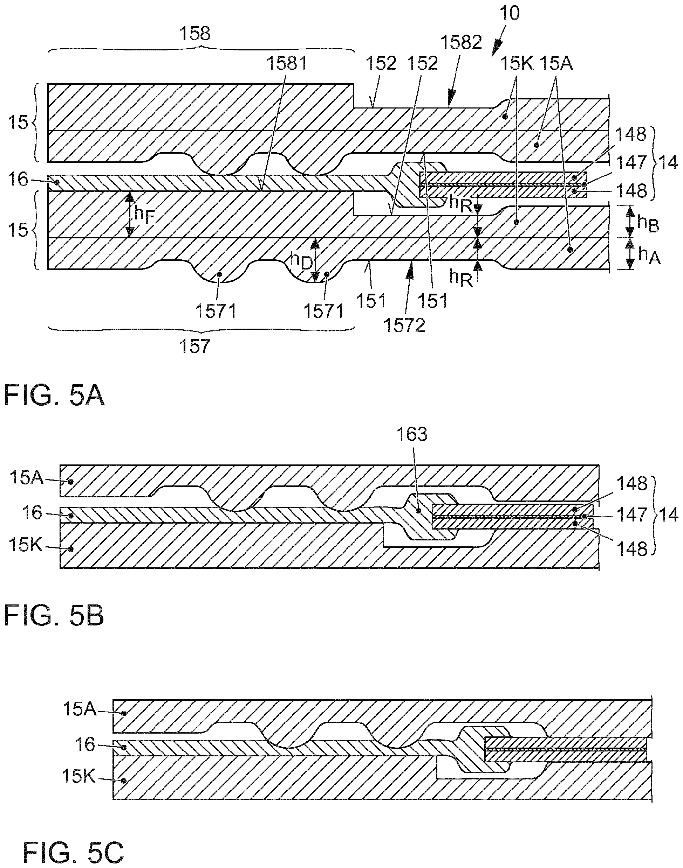

Zur Lösung dieser Probleme weist eine Bipolarplatte 15 gemäß der vorliegenden Erfindung, wie in Figur 5 dargestellt, eine asymmetrische Gestaltung ihrer Dichtungsabschnitte 157, 158 auf. In den nachfolgenden Figuren werden für gleiche Elemente die gleichen Bezugszeichen wie in Figur 4 verwendet.

Erfindungsgemäß weist der erste Dichtungsabschnitt 157, der auf der ersten Seite 151 der Anodenplatte ausgebildet ist, mindestens einen, im dargestellten Beispiel zwei Dichtungsvorsprünge 1571 auf. Die Dichtungsvorsprünge 1571 zeichnen sich dadurch aus, dass ihre Höhe h_{D} gegenüber einer Basishöhe h_{A} der Anodenplatte 15A größer ist, sodass die Dichtungsvorsprünge 1571 gegenüber der Basishöhe h_{A} der Anodenplatte 15A herausragen. Hingegen ist der zweite Dichtungsabschnitt 158, der auf der Kathodenseite 152 der Kathodenplatte 15K ausgebildet ist, ohne einen solchen Dichtungsvorsprung ausgebildet und weist eine im Wesentlichen ebene Anlagefläche1581 auf. Diese ebene und frei von Dichtungsvorsprüngen ausgebildete Anlagefläche 1581 des zweiten Dichtungsabschnitts 158 erstreckt sich vorzugsweise bis zum Rand der Bipolarplatte 15 (in der Abbildung links). In der dargestellten Ausführung ist die Plattenstärke h_{F} der zweiten Halbplatte 15K im Bereich des zweiten Dichtungsabschnitts 158 größer als die Basisstärke h_{B} der Halbplatte 15K außerhalb des zweiten Dichtungsabschnitts 158. Dies führt zu einer verbesserten Stabilität in diesem Bereich.

Wie in Figur 5 dargestellt, können die Dichtungsvorsprünge 1571 ferner in einem abgesenkten Abschnitt 1572 der ersten Halbplatte 15A angeordnet sein. Der abgesenkte Abschnitt 1572 weist eine Plattenstärke h_{R} auf, die gegenüber der Basisplattenstärke h_{A} der ersten Halbplatte 15A verringert ist. Desgleichen kann vorgesehen sein, dass die erhöhte Anlagefläche 1581 des zweiten Dichtungsabschnitts 158 innerhalb eines abgesenkten Abschnitts 1582 der zweiten Halbplatte 15K angeordnet ist.

Die erfindungsgemäße Ausgestaltung der Bipolarplatte 15 entfaltet ihre beste Dichtwirkung, wenn sie, wie in Figur 5 gezeigt, in Kombination mit einem zumindest im Bereich der Dichtungsabschnitte 157, 158 der Bipolarplatten 15 flach ausgebildeten Dichtungselement 16 eingesetzt wird. Mit anderen Worten weist ein solches Dichtungselement 16 zumindest in diesem Randbereich eine gleichmäßige Stärke von beispielsweise 250 µm auf.

Die Figuren 5B und C zeigen die Brennstoffzelle 10 aus Figur 5A in einem Zustand, in dem das Dichtungselement 16 um einen Kompressionsgrad von 42 % beziehungsweise 50 % im Bereich der Dichtungsvorsprünge 1571 durch Einwirkung einer entsprechenden Anpresskraft komprimiert wird. Dargestellt in den Figuren B und C sind jeweils nur die Anodenplatte 15A der oberen Bipolarplatte und die Kathodenplatte 15K der unteren Bipolarplatte. Es ist erkennbar, dass in dem erfindungsgemäßen Design - anders als in dem herkömmlichen Design nach Figur 4 - keine Presskraft auf den Verbindungsabschnitt 163 zur MEA 14 einwirkt. Es ist im Rahmen der Erfindung daher auch möglich, auf einen aufgewölbten Verbindungsabschnitt 163 zu verzichten und eine andere Form der Verbindung zur MEA 14 zu wählen.

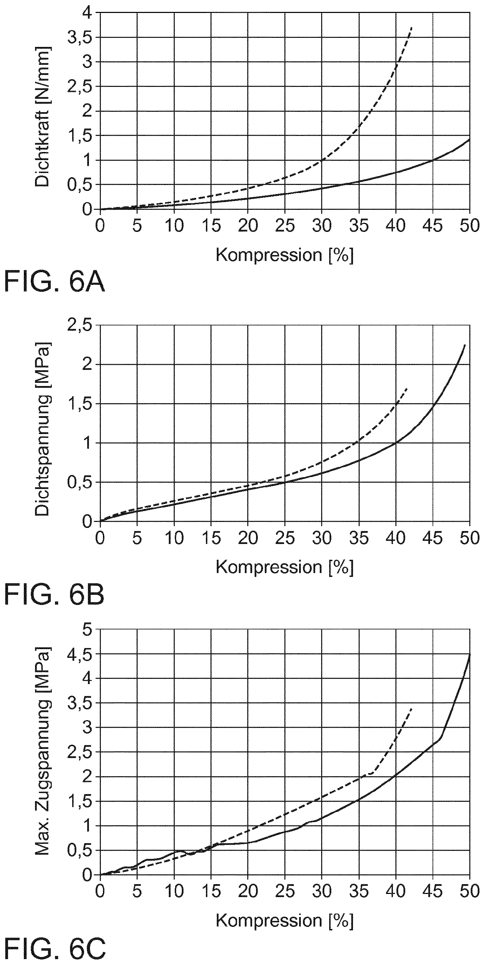

In einer Computersimulation wurden für die in den Figuren 4 und 5 dargestellten Brennstoffzellen 10 verschiedene physikalische Parameter in Abhängigkeit von der Kompression der jeweiligen Dichtungselemente 16 ermittelt. Dabei zeigen die gestrichelt dargestellten Kurven jeweils die Verläufe für die in Figur 4 gezeigte Brennstoffzelle 10 gemäß Stand der Technik und die durchgezogene Kurve jeweils die Verläufe für die in Figur 5 dargestellte erfindungsgemäße Brennstoffzelle 10. Figur 6A zeigt die Dichtkraft, die aufgewendet werden muss, um bestimmte Kompressionsgrade des Dichtungselements 16 zu erzielen. Es ist erkennbar, dass über den gesamten Verlauf die aufzuwendende Dichtkraft für die erfindungsgemäße Brennstoffzelle 10 wesentlich geringer ist als für die herkömmliche Brennstoffzelle. Um beispielsweise einen Kompressionsgrad um 40 % des unkomprimierten Dichtungselements 16 zu erhalten, muss in dem erfindungsgemäßen Design lediglich eine Kraft von ca. 0,75 N/mm aufgewendet werden, während in der herkömmlichen Brennstoffzelle für die gleiche Kompression eine Kraft von fast 3 N/mm erforderlich ist. Zudem ist die maximale Kompression der herkömmlichen Brennstoffzelle auf etwa 42% beschränkt (vergleiche Figur 4B).

Figur 6B zeigt den Verlauf der erzielten Dichtspannung in Abhängigkeit des Kompressionsgrades. In dieser Simulation liegt die erzielte Dichtspannung oder Dichtkraft der erfindungsgemäßen Brennstoffzelle nur unwesentlich unterhalb der erzielten Dichtspannung der herkömmlichen Zelle. Die Dichtspannung stellt ein Maß für die erzielte Dichtigkeit der Brennstoffzelle dar. Beispielsweise ist in dem herkömmlichen Design zur Erzielung einer Dichtspannung von 1 MPa ein Kompressionsgrad von knapp 35 % entsprechend einer Dichtkraft von 1,7 N/mm erforderlich. Hingegen benötigt die erfindungsgemäße Zelle für die gleiche Dichtspannung von 1 MPa einen Kompressionsgrad von fast 40 %, der jedoch mit einer wesentlich geringeren Dichtkraft von 0,75 N/mm erzielt wird. Es wird erwartet, dass durch eine weitere Optimierung der Dichtungsvorsprünge sowie der Stärke des Dichtungselements 16 eine Dichtspannung erhalten wird, die mindestens so groß ist wie in dem herkömmlichen Design.

Figur 6C zeigt die Verläufe der maximalen Zugspannung im Material des Dichtungselements 16 als Funktion der Kompression. Hier zeigt sich, dass die maximale Zugspannung im erfindungsgemäßen Design geringer ist als in der herkömmlichen Zelle. Somit wird für das erfindungsgemäße Design eine verlängerte Lebensdauer des Dichtungselements 16 erwartet.

Die gleichen Simulationen wurden für die erfindungsgemäße Brennstoffzelle durchgeführt, wenn die Anodenplatte 15A gegenüber der Kathodenplatte 15K um 250 µm nach rechts gemäß der Darstellung in Figur 5 versetzt angeordnet ist. Erwartungsgemäß hatte dies praktisch keinerlei Auswirkungen auf die Resultate (nicht dargestellt).

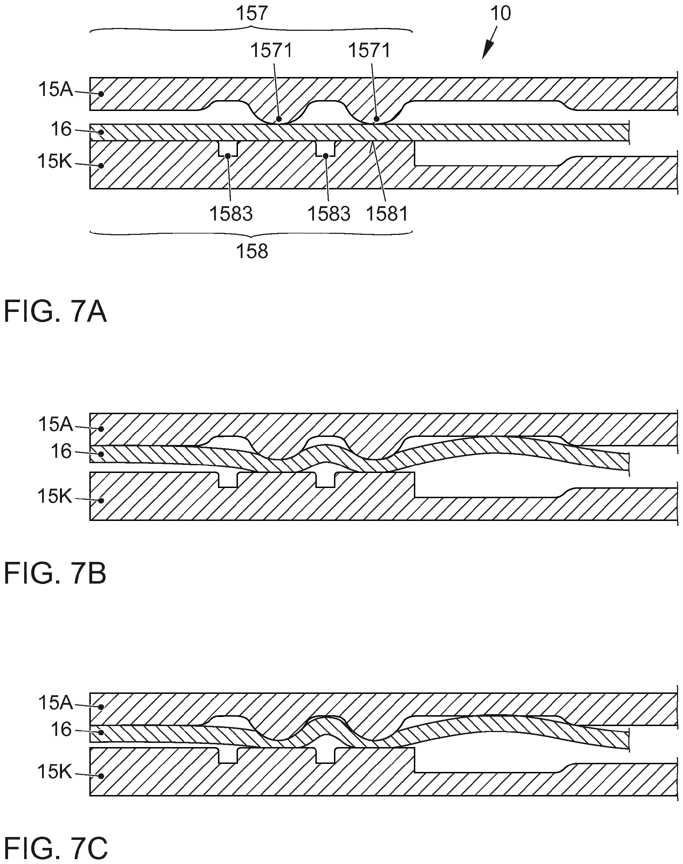

In Figur 7 ist eine erfindungsgemäße Brennstoffzelle 10 gemäß einer zweiten Ausgestaltung der Erfindung gezeigt (auf die Darstellung der MEA 14 wurde hier verzichtet). Dargestellt ist jeweils nur die Anodenplatte 15A der oberen Bipolarplatte 15 und die Kathodenplatte 15K der unteren Bipolarplatte. Im Unterschied zu der in Figur 5 dargestellten Ausführung unterscheidet sich die Ausführung gemäß Figur 7 darin, dass die Anlagefläche 1581 des Dichtungsabschnitts 158 der Kathodenplatte 15K Nuten 1583 aufweist, durch die die Anlagefläche 1581 segmentiert ist. Die Nuten 1583 sind hierbei versetzt zu den Dichtungsvorsprüngen 1571 der Anodenplatte 15A angeordnet, sodass sich die Nuten 1583 und die Dichtungsvorsprünge 1571 nicht gegenüberliegen. Ferner weisen die Nuten 1583 eine Dimensionierung, insbesondere eine Breite auf, die ein Eindringen des Dichtungselements 16 in die Nuten 1583 verhindert. Die Ausbildung der Anlagefläche 1581 der Kathodenplatte 15K im Dichtungsabschnitt 158 erlaubt die Steuerung der Kontaktfläche zwischen dem Dichtungselement 16 und den Platten 15A und 15K. Die Figuren 7A und B zeigen wiederum die Verformung des Dichtungselements 16 bei einem Kompressionsgrad von 42% beziehungsweise von 50%.

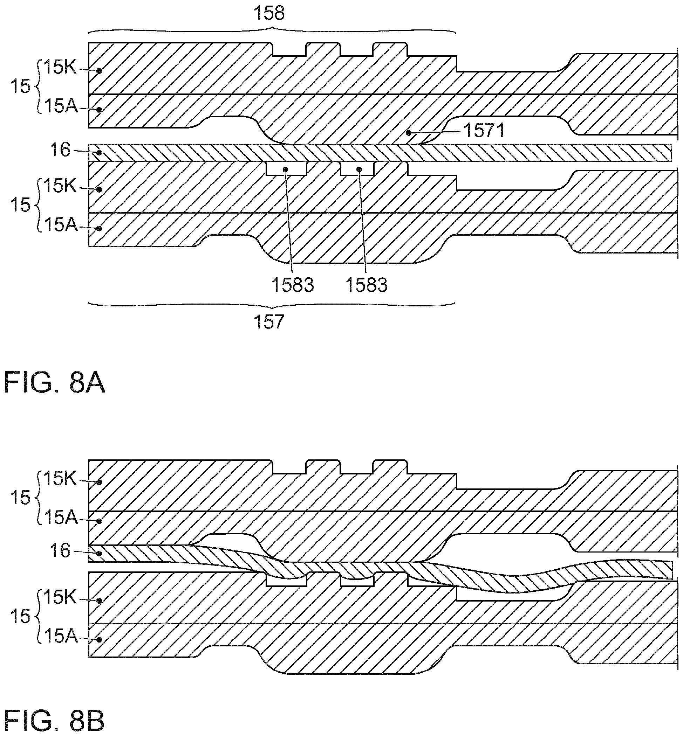

Noch eine weitere Ausgestaltung einer erfindungsgemäßen Brennstoffzelle 10 ist in Figur 8 gezeigt, wobei Figur 8A den unkomprimierten Zustand und Figur 8B die Brennstoffzelle 10 bei einem Kompressionsgrad des Dichtungselements 16 von 50% darstellt. Auf die Darstellung der MEA 14 wurde hier verzichtet. In diesem Bespiel weist der Dichtungsabschnitt 157 der Anodenplatte 15A lediglich einen einzigen relativ breiten Dichtungsvorsprung 1571 auf, der eine abgerundete Kontur mit flacher Stirnseite besitzt. Der gegenüberliegende Dichtungsabschnitt 158 der Kathodenplatte 15K ist durch hier zwei Nuten 1583 segmentiert, deren Nutbreite größer gewählt ist als in Figur 7. Zudem sind die Nuten 1583 so angeordnet, dass sie dem Dichtungsvorsprung 1571 der Anodenplatte 15A gegenüberliegen. Dies führt bei Ausübung einer Anpresskraft dazu, dass - wie in Figur 8B erkennbar - das Dichtungselement 16 teilweise in die Nuten 1583 hineingedrückt wird.

### Bezugszeichenliste

- 100: Brennstoffzellensystem

- 10: Brennstoffzellenstapel
- 11: Einzelzelle
- 12: Anodenraum
- 13: Kathodenraum

- 14: Membran-Elektroden-Anordnung (MEA)
- 141: Anodenseite
- 142: Kathodenseite
- 143: katalytische Elektrode / Anode
- 144: Versorgungsöffnung / Anodeneinlassöffnung oder Anodenauslassöffnung
- 145: Versorgungsöffnung / Kathodeneinlassöffnung oder Kathodenauslassöffnung
- 146: Versorgungsöffnung / Kühlmitteleinlassöffnung oder Kühlmittelauslassöffnung
- 147: Laminat aus Polymerelektrolytmembran und katalytischen Elektroden
- 148: Gasdiffusionsschicht

- 15: Bipolarplatte (Separatorplatte, Flussfeldplatte)
- 15A: erste Halbplatte / Anodenplatte
- 15K: zweite Halbplatte / Kathodenplatte
- 151: erste Seite / Anodenseite
- 152: zweite Seite / Kathodenseite
- 153: Betriebsmittelkanal / Anodenkanal oder Kathodenkanal / erstes oder zweites Flussfeld
- 154: Versorgungsöffnung / Anodeneinlassöffnung oder Anodenauslassöffnung
- 155: Versorgungsöffnung/ Kathodeneinlassöffnung oder Kathodenauslassöffnung
- 156: Versorgungsöffnung / Kühlmitteleinlassöffnung oder Kühlmittelauslassöffnung
- 157: erster Dichtungsabschnitt
- 1571: Dichtungsvorsprung
- 1572: abgesenkter Abschnitt
- 158: zweiter Dichtungsabschnitt
- 1581: Anlagefläche
- 1582: abgesenkter Abschnitt
- 16: Dichtungselement
- 161: Grundkörper
- 162: Dichtungswulst
- 163: Verbindungsabschnitt

- 20: Anodenversorgung
- 21: Anodenversorgungspfad
- 22: Anodenabgaspfad
- 23: Brennstofftank
- 24: Stellmittel
- 25: Brennstoffrezirkulationsleitung

- 30: Kathodenversorgung
- 31: Kathodenversorgungspfad
- 32: Kathodenabgaspfad
- 33: Verdichter
- 34: Elektromotor
- 35: Leistungselektronik
- 36: Turbine
- 37: Wastegate-Leitung
- 38: Stellmittel
- 39: Befeuchtermodul

- AA: Aktiver Bereich (Reaktionsbereich, *active area*)
- SA: Versorgungsbereich (*supply area*)
- DA: Verteilerbereich (*distribution area*)

- h_{A}: Basisstärke der ersten Halbplatte / Anodenplatte
- h_{K}: Basisstärke der zweiten Halbplatte / Kathodenplatte
- h_{D}: Höhe des Dichtungsvorsprungs
- h_{R}: Wandstärke im abgesenkten Abschnitt
- h_{F}: Wandstärke der Anlagefläche

## Patentansprüche

1. Bipolarplatte (15) für einen Brennstoffzellenstapel (10), umfassend eine erste Seite (151), auf der ein erstes Flussfeld ausgebildet ist, und eine zweite Seite (152), auf der ein zweites Flussfeld (153) ausgebildet ist, sowie ein das erste Flussfeld umgebender erster Dichtungsabschnitt (157) und ein das zweite Flussfeld (153) umgebender zweiter Dichtungsabschnitt (158), wobei die Dichtungsabschnitte (157, 158) ausgebildet sind, in einem Brennstoffzellenstapel (10) mit einem elastischen Dichtungselement (16) dichtend zusammenzuwirken, **dadurch gekennzeichnet, dass** in dem ersten Dichtungsabschnitt (157) mindestens ein Dichtungsvorsprung (1571) ausgebildet ist und der zweite Dichtungsabschnitt (158) ohne Dichtungsvorsprung und/oder im Wesentlichen eben ausgebildet ist.

2. Bipolarplatte (15) nach Anspruch 1, **dadurch gekennzeichnet, dass** der zweite Dichtungsabschnitt (158) über seine gesamte Breite ohne Dichtungsvorsprung und/oder im Wesentlichen eben ausgebildet ist.

3. Bipolarplatte (15) nach Anspruch 1 oder 2, **dadurch gekennzeichnet, dass** der zweite Dichtungsabschnitt (158) durch mindestens eine Nut (1583) segmentiert ist, wobei die Nut (1583) bezüglich dem mindestens einen Dichtungsvorsprung (1571) versetzt angeordnet ist.

4. Bipolarplatte (15) nach einem der vorhergehenden Ansprüche, **dadurch gekennzeichnet, dass** der mindestens eine Dichtungsvorsprung (1571) des ersten Dichtungsabschnitts (157) im Querschnitt eine abgerundete Kontur oder eine abgerundete Kontur mit flacher Stirnseite aufweist.

5. Bipolarplatte (15) nach einem der vorhergehenden Ansprüche, **dadurch gekennzeichnet, dass** der erste Dichtungsabschnitt (157) einen einzigen Dichtungsvorsprung (1571) aufweist und der zweite Dichtungsabschnitt (158) durch mindestens eine Nut (1583) segmentiert ist, wobei die mindestens eine Nut (1583) dem Dichtungsvorsprung (1571) gegenüberliegt.

6. Bipolarplatte (15) nach einem der vorhergehenden Ansprüche, **dadurch gekennzeichnet, dass** die Bipolarplatte (15) aus einer ersten und einer zweiten miteinander zusammengesetzten Halbplatten (15A, 15K) ausgebildet ist und eine Plattenstärke (h_{F}) der zweiten Halbplatte (15K) im Bereich des zweiten Dichtungsabschnitts (158) im Wesentlichen gleich oder größer ist als eine Basisstärke (h_{B}) außerhalb des zweiten Dichtungsabschnitts (158).

7. Bipolarplatte (15) nach einem der vorhergehenden Ansprüche, **dadurch gekennzeichnet, dass** die Bipolarplatte (15) aus einem elektrisch leitfähigen Kohlenstoff-basierten Werkstoff hergestellt ist, insbesondere aus Graphit oder einem Graphit-Polymer-Kompositmaterial.

8. Brennstoffzellenstapel (10), umfassend eine Mehrzahl abwechselnd aufeinander angeordneter Bipolarplatten (15) nach einem der vorhergehenden Ansprüche und elastischen Dichtungselementen (16), **dadurch gekennzeichnet, dass** die Dichtungselemente (16) zumindest im Bereich der Dichtungsabschnitte (157, 158) der Bipolarplatten (15) flach ausgebildet sind.

9. Brennstoffzellenstapel (10) nach Anspruch 8, **dadurch gekennzeichnet, dass** das elastische Dichtungselement (16) eine gleichmäßige Stärke im Bereich von 100 bis 500 µm, insbesondere im Bereich von 150 bis 400 µm, vorzugsweise im Bereich von 200 bis 300 µm, aufweist.

10. Brennstoffzellenstapel (10) nach einem der Ansprüche 8 bis 9, **dadurch gekennzeichnet, dass** das elastische Dichtungselement (16) Teil einer Membran-Elektroden-Anordnung (14) ist, insbesondere einen Randbereich derselben ausbildet.

## Claims

1. Bipolar plate (15) for a fuel cell stack (10), comprising a first side (151), on which a first flow field is formed, and a second side (152), on which a second flow field (153) is formed, and a first sealing section (157) surrounding the first flow field and a second sealing section (158) surrounding the second flow field (153), wherein the sealing sections (157, 158) are designed to cooperate in a sealing manner with an elastic sealing element (16) in a fuel cell stack (10), **characterised in that** at least one sealing projection (1571) is formed in the first sealing section (157) and the second sealing section (158) is formed without a sealing projection and/or substantially flat.

2. Bipolar plate (15) according to claim 1, **characterised in that** the second sealing section (158) is formed, over its entire width, without a sealing projection and/or substantially flat.

3. Bipolar plate (15) according to claim 1 or 2, **characterised in that** the second sealing section (158) is segmented by at least one groove (1583), wherein the groove (1583) is arranged offset in relation to the at least one sealing projection (1571).

4. Bipolar plate (15) according to any one of the preceding claims, **characterised in that** the at least one sealing projection (1571) of the first sealing section (157) has in its cross-section a rounded contour or a rounded contour with flat end face.

5. Bipolar plate (15) according to any one of the preceding claims, **characterised in that** the first sealing section (157) has a single sealing projection (1571) and the second sealing section (158) is segmented by at least one groove (1583), wherein the at least one groove (1583) is opposite the sealing projection (1571).

6. Bipolar plate (15) according to any one of the preceding claims, **characterised in that** the bipolar plate (15) is formed by a first and a second plate half (15A, 15K) joined together and a plate strength (h_{F}) of the second plate half (15K) in the region of the second sealing section (158) is substantially equal to or greater than a base strength (h_{B}) outside of the second sealing section (158).

7. Bipolar plate (15) according to any one of the preceding claims, **characterised in that** the bipolar plate (15) is manufactured from an electrically-conductive carbon-based material, in particular from graphite or a graphite-polymer composite material.

8. Fuel cell stack (10), comprising a plurality of bipolar plates (15) arranged alternately on top of one another according to any one of the preceding claims and elastic sealing elements (16), **characterised in that** the sealing elements (16) are formed flat at least in the region of the sealing sections (157, 158) of the bipolar plates (15).

9. Fuel cell stack (10) according to claim 8, **characterised in that** the elastic sealing element (16) has a uniform strength in the range of 100 to 500 µm, in particular in the range of 150 to 400 µm, preferably in the range of 200 to 300 µm.

10. Fuel cell stack (10) according to any one of claims 8 to 9, **characterised in that** the elastic sealing element (16) is part of a membrane electrode arrangement (14), in particular forms an edge region of the same.

## Revendications

1. Plaque bipolaire (15) pour un empilement de piles à combustible (10), comprenant un premier côté (151), sur lequel un premier champ d'écoulement est réalisé, et un second côté (152), sur lequel un second champ d'écoulement (153) est réalisé, ainsi qu'une première section d'étanchéité (157) entourant le premier champ d'écoulement et une seconde section d'étanchéité (158) entourant le second champ d'écoulement (153), dans laquelle les sections d'étanchéité (157, 158) sont réalisées pour coopérer de manière étanche avec un élément d'étanchéité (16) élastique dans un empilement de piles à combustible (10), **caractérisée en ce qu'**au moins une partie faisant saillie d'étanchéité (1571) est réalisée dans la première section d'étanchéité (157) et la seconde section d'étanchéité (158) est réalisée sans partie faisant saillie d'étanchéité et/ou sensiblement de manière plane.

2. Plaque bipolaire (15) selon la revendication 1, **caractérisée en ce que** la seconde section d'étanchéité (158) est réalisée sur toute sa largeur sans partie faisant saillie d'étanchéité et/ou sensiblement de manière plane.

3. Plaque bipolaire (15) selon la revendication 1 ou 2, **caractérisée en ce que** la seconde section d'étanchéité (158) est segmentée par au moins une rainure (1583), dans laquelle la rainure (1583) est disposée de manière décalée par rapport à l'au moins une partie faisant saillie d'étanchéité (1571).

4. Plaque bipolaire (15) selon l'une quelconque des revendications précédentes, **caractérisée en ce que** l'au moins une partie faisant saillie d'étanchéité (1571) de la première section d'étanchéité (157) présente, dans la section transversale, un contour arrondi ou un contour arrondi avec un côté frontal plat.

5. Plaque bipolaire (15) selon l'une quelconque des revendications précédentes, **caractérisée en ce que** la première section d'étanchéité (157) présente une unique partie faisant saillie d'étanchéité (1571) et la seconde section d'étanchéité (158) est segmentée par au moins une rainure (1583), dans laquelle l'au moins une rainure (1583) fait face à la partie faisant saillie d'étanchéité (1571).

6. Plaque bipolaire (15) selon l'une quelconque des revendications précédentes, **caractérisée en ce que** la plaque bipolaire (15) est réalisée à partir d'une première et d'une seconde demi-plaque (15A, 15K) regroupées l'une à l'autre, et une épaisseur de plaque (h_{F}) de la seconde demi-plaque (15K) est sensiblement identique ou plus grande dans la zone de la seconde section d'étanchéité (158) qu'une épaisseur de base (h_{B}) à l'extérieur de la seconde section d'étanchéité (158).

7. Plaque bipolaire (15) selon l'une quelconque des revendications précédentes, **caractérisée en ce que** la plaque bipolaire (15) est fabriquée à partir d'un matériau à base de carbone électroconducteur, en particulier à partir de graphite ou d'un matériau composite en graphite et polymère.

8. Empilement de piles à combustible (10), comprenant une multitude de plaques bipolaires (15) disposées en alternance les unes sur les autres selon l'une quelconque des revendications précédentes, et des éléments d'étanchéité (16) élastiques, **caractérisé en ce que** les éléments d'étanchéité (16) sont réalisés de manière plate au moins dans la zone des sections d'étanchéité (157, 158) des plaques bipolaires (15).

9. Empilement de piles à combustible (10) selon la revendication 8, **caractérisé en ce que** l'élément d'étanchéité (16) élastique présente une épaisseur homogène dans la plage allant de 100 à 500 µm, en particulier dans la plage allant de 150 à 400 µm, de préférence dans la plage allant de 200 à 300 µm.

10. Empilement de piles à combustible (10) selon l'une quelconque des revendications 8 et 9, **caractérisé en ce que** l'élément d'étanchéité (16) élastique fait partie d'un ensemble membrane-électrodes (14), en particulier réalise une zone de bord de celui-ci.
